# EUROPEAN PATENT APPLICATION

(11) **EP 4 518 192 A1**
(43) Date of publication of application: **05.03.2025**
(21) Application number: 23194618.7
(22) Date of filing: 31.08.2023
(51) Int. Cl.: H04B 10/071, H04B 10/272

(54) **DIAGNOSTIC APPARATUS FOR A FIBRE OPTIC TELECOMMUNICATIONS NETWORK, AND A METHOD OF OPERATING THE SAME**

(71) Applicant: British Telecommunications public limited company, London E1 8EE (GB)
(72) Inventor: PARKIN, Neil, London, E1 8EE (GB); FLEMING, Lauren, London, E1 8EE (GB)
(74) Representative: British Telecommunications public limited company Intellectual Property Department

(57) **Abstract**

A method (300) of operating a fibre optic network (100), said network comprising: a terminal laser for transmitting a first optical signal having a first pulse width; an Optical Time-Domain Reflectometer (120), OTDR, for measuring the first optical signal thereby to perform diagnostics upon the fibre optic telecommunications network; at least one Optical Network Unit (160), ONU; an optical signal generator (170), arranged between the OTDR and the at least one ONU, and comprising: a photosensor (230) for sensing the first optical signal from the terminal laser; and a light source (270) for transmitting a second optical signal to the at least one ONU, the second optical signal having a second pulse width; the method comprising the steps of: transmitting, by means of the terminal laser, the first optical signal to the optical signal generator (310); detecting, by means of the photosensor, the first optical signal (330); transmitting, in response to said detecting, and by means of the light source, the second optical signal to the at least one ONU (340), wherein the second pulse width is shorter than the first pulse width.

## Description

### Field of Invention

The present invention relates to an apparatus for use in testing and diagnostics of a fibre optic telecommunications network, as well as to a corresponding fibre optic telecommunications network, and to a method of operating said apparatus.

### Background

A Passive Optical Network (PON) is a fibre-optic telecommunications technology for delivering broadband network access to end-customers utilising a point-to-multipoint topology, in which a single optical fibre serves multiple endpoints by using unpowered (i.e. passive) fibre optic splitters connecting multiple endpoints via drop fibres. PON technology reduces cost and complexity. However, the optical splitter introduces a large amount of attenuation or optical loss.

Fault finding in a PON to find breaks, faulty connectors, bends or other damage to the optical fibre can be carried out in many ways, including using an Optical Time-Domain Reflectometer (OTDR). An OTDR is an optoelectronic instrument used to characterise an optical fibre network. OTDR works by sending a short pulse of light (a "diagnostic signal") into the optical fibre network and measuring Fresnel back-reflections and Rayleigh backscatter, which helps detect the state of the optical fibre. The time it takes for the light to travel to the reflection point and back is used to calculate the distance to the reflection point.

Attenuation induced by the optical splitter may greatly reduce the capability of an OTDR (which is typically located at a headend of the fibre optic network) to detect reflections and backscatter beyond the optical splitter. As a result, a diagnostic signal from the OTDR is configured to have a sufficiently long pulse width so that a return signal, having made a roundtrip to network endpoints, has sufficient energy so as to be detectable by the OTDR. However, with increasing pulse width, spatial resolution decreases; this may render a fault unresolvable, and therefore invisible, to the OTDR.

To help mitigate this problem, a reflector may be located beyond the optical splitter to ensure greater reflection back towards the OTDR. This low-cost solution may cause saturation and obfuscation of weaker signals. Where multiple such reflectors are used, it may also be difficult to disentangle the many return signals from the multiple reflectors.

It is an aim of the present invention to at least alleviate some of the aforementioned problems.

### Statements of Invention

According to a first aspect of the present invention, there is provided: a method of operating a fibre optic network, said network comprising: a terminal laser for transmitting a first optical signal having a first pulse width; an Optical Time-Domain Reflectometer, OTDR, for measuring the first optical signal thereby to perform diagnostics upon the fibre optic telecommunications network; at least one Optical Network Unit, ONU; an optical signal generator, arranged between the OTDR and the at least one ONU, and comprising: a photosensor for sensing the first optical signal from the terminal laser; and a light source for transmitting a second optical signal to the at least one ONU, the second optical signal having a second pulse width; the method comprising the steps of: transmitting, by means of the terminal laser, the first optical signal to the optical signal generator; detecting, by means of the photosensor, the first optical signal; transmitting, in response to said detecting, and by means of the light source, the second optical signal to the at least one ONU, wherein the second pulse width is shorter than the first pulse width.

Preferably, the terminal laser is formed as part of: the Optical Time-Domain Reflectometer, OTDR; an Optical Line Terminal, OLT; an Optical Network Terminal, ONT; or the at least one ONU. Preferably, the terminal laser is provided at a headend and/or at a downstream terminus. Preferably, the first pulse width is a pulse width as: configured for transmission by the terminal laser; transmitted by the terminal laser; or received by the photoreceiver. Preferably, the second pulse width is a pulse width as: configured from transmission by the signal generator; transmitted by the signal generator; or received by at least one of the plurality of ONUs. Preferably, the wavelengths of the first and second optical signals are non-overlapping and are different. Optionally, the wavelengths of the first and second optical signals are overlapping or identical. Preferably, the first pulse width is between 1µs and 200µs, more preferably between 1µs and 100µs, and still more preferably between 1µs and 20µs. Preferably, the first optical signal is configured to have a range (e.g. to reach up to the optical signal generator and for reflections therefrom to be detectable by the OTDR) of between 0.5km and 120km, more preferably between 1km and 90km, still more preferably between 10km and 70km, and yet more preferably between 20km and 60km. Preferably, the second pulse has a pulse width of less than 1µs, more preferably less than 500ns, still more preferably less than 250ns, yet more preferably less than 100ns, and even more preferably less than 50ns. Preferably, the second optical signal is configured to have a range (i.e. to reach at least one of the plurality of ONUs and for reflections therefrom to be detectable by the OTDR) of less than 70km, more preferably less than 50km, still more preferably less than 35km, and even more preferably of less than 10km. Preferably, the relative pulse widths of the second optical signal to that of the first optical signal is less than 0.5, more preferably less than 0.25, still more preferably less than 0.1, yet more preferably less than 0.01, and even more preferably less than 0.001.

Preferably, an optical parameter of the second optical signal is predefined, and wherein said optical parameter is stored in, or is communicated to, the optical signal generator. Preferably, the optical parameter comprises at least one of: pulse width (or "pulse duration"); wavelength; intensity; power; polarisation; and/or modulation (e.g. amplitude and/or frequency, such as to encode information). Optionally, the optical parameter is communicated by means of the first optical signal, which may encode for said optical parameters.

Preferably, the optical parameter of the second optical signal is independent of the first optical signal. Preferably, the optical parameters of the second optical signal are constant.

Preferably, the photosensor is configured to measure an optical parameter of the first optical signal, and wherein an optical parameter of the second optical signal is determined in dependence upon the measured optical parameter of the first optical signal. Preferably, the optical parameter of the second optical signal is different to the optical parameter of the first optical signal. Optionally, the optical parameter of the second optical signal is determined according to a: look-up table for mapping the measured optical parameter to the optical parameter of the second optical signal; and/or applying a function for converting the measured optical parameter to the optical parameter of the second optical signal. Optionally, the function is: linear; non-linear; and/or piecewise.

Preferably, the second optical signal comprises a plurality of discrete optical signals, and wherein each of the plurality of discrete optical signals has a different optical parameter. Preferably, all of the plurality of discrete optical signals are transmitted in response to detecting, by means of the photosensor, the first optical signal. Preferably, the discrete optical signals vary, and may only vary, as to their pulse widths and/or wavelength. Preferably, transmission of each successive discrete optical signal is delayed by a time interval. Optionally, said time interval is at least a roundtrip time for an optical signal from the optical signal generator to the OTDR via at least one of the plurality of ONUs. Optionally, the first optical signal comprises only a single discrete pulse. Optionally, the second optical signal comprises only a single discrete pulse.

Preferably, transmitting the second optical signal is performed after the detection of the first optical signal ends. In this way, to help improve separability of the received optical signals, the (return) second optical signal may be received by the OTDR after the (return) first optical signal has been fully received by the OTDR.

Preferably, transmitting the second optical signal is performed during ongoing detection, by the photosensor, of the first optical signal. Preferably, the transmitting of the second optical signal is performed after a threshold detection time for identifying the first optical signal. Preferably, said threshold detection time is between 1% and 75% of the first pulse width, and more preferably between 10% and 50% of the first pulse width. Preferably, the optical signal generator is configured so as to minimise the threshold detection time.

Preferably, the OTDR comprises a listening timeframe for processing the first optical signal, and wherein the second optical signal is transmitted, and at least in part received, within the listening timeframe. Preferably, the listening timeframe is greater than the sum of the first and second pulse widths. Optionally, the second optical signal is fully transmitted within the listening timeframe, and may be transmitted so as fully to be received by the OTDR within said listening timeframe. Preferably, the OTDR is configured to continue performing ongoing detection even after detection of the first optical signal ends, and therefore to have a listening timeframe longer that the roundtrip time of the first optical signal to the at least one ONU.

Preferably, the first optical signal comprises an optical trigger signal, and wherein transmitting the second optical signal is performed in response to detecting said optical trigger signal. Preferably, the optical trigger signal forms a part of, and less than the whole of, the first optical signal. Optionally, the first optical signal is entirely formed of only the optical trigger signal. Preferably, there are provided a plurality of different optical trigger signals and second optical signals, each having different optical parameters, and wherein each of plurality optical trigger signals corresponds with a different one of the second optical signals, and wherein the optical signal generator is configured to detect and distinguish each optical trigger signal and to transmit a second optical signal that corresponds with a detected trigger signal encodes. Preferably, the optical trigger signal is characterised by predefined optical parameters, in which said optical parameters are stored in the optical signal generator. Preferably, the optical signal generator is configured to transmit the second optical signal in response only to detecting the trigger signal. Preferably, the optical signal generator is configured to be receptive to only the trigger signal.

Preferably, the method further comprises the step of receiving and processing, at and by the OTDR, at least a return second optical signal, said signal resulting from backscatter and/or reflection of the second optical signal.
Preferably, the method further comprises the step of the OTDR disregarding a return first optical signal, said signal resulting from backscatter and/or reflection of the first optical signal. Optionally, the step of disregarding the return first optical signal is performed by using a filter to filter-out the return first optical signal, but not the return second optical signal, based on a distinguishing optical parameter between said signals. The distinguishing optical parameter may be wavelength or time of receipt. Preferably, the step of processing the return second optical signal is performed so as to produce an OTDR trace.

Preferably, the optical signal generator comprise a further photosensor for sensing, from the at least one ONU, a third optical signal, wherein, the optical signal generator is configured to transmit the second optical signal in response to detecting an absence of the third optical signal after a predetermined period of time. Preferably, the third optical signal is an upstream communication from the at least one ONU, and may be an upstream aggregated light signal from a plurality of ONUs.

According to another aspect, there is provided a computer-readable carrier medium comprising a computer program, which, when the computer program is executed by a computer, causes the computer to carry out any of the steps described above.

According to yet another aspect, there is provided an optical signal generator for testing a fibre optic telecommunications network, said network comprising: a terminal laser for transmitting a first optical signal having a first pulse width; an Optical Time-Domain Reflectometer, OTDR, for measuring the first optical signal thereby to perform diagnostics upon the fibre optic telecommunications network; at least one Optical Network Unit, ONU; and the optical signal generator comprising: a photosensor for sensing the first optical signal from the terminal laser; a light source for transmitting a second optical signal to the at least one ONU, the second optical signal having a second pulse width; and a controller configured to: identify, using an input from the photosensor, the first optical signal; and cause the light source to transmit, in response to identifying the first optical signal, the second optical signal to at least one ONU, wherein the second pulse width is shorter than the first pulse width.

Preferably, the optical signal generator is arranged proximate to and/or upstream of a power splitter of the fibre optic network, in which said power splitter connects the OTDR with the at least one ONU. Preferably, the optical signal generator is arranged downstream of the power splitter. Optionally, the optical signal generator is arranged within a/an: exchange; cabinet; or distribution point. Preferably, the photosensor is in the form of a photodiode. Preferably, the optical signal generator further comprises an electrical amplifier for amplifying an output of the photosensor. Preferably, the optical signal generator further comprises a power source for powering, at least, the light source. Optionally, the power source comprises a/an: battery; electrical circuitry for coupling to, and receiving power from, an external power source; a photovoltaic cell, such as for generating electrical power from light, in which said light may be the first optical signal. Preferably, the optical signal generator further comprises a controller (or microcontroller) for operating the light source, processing the first optical signal and/or configuring the second optical signal. Preferably, the controller is in the form of fixed-logic or an ASIC. Preferably, the optical signal generator further comprises an optical interface for coupling to a fibre optic network, and in particular to a secondary input of the, or a, power splitter. Optionally, the optical signal generator further comprises an optical filter for filtering an optical signal from the OTDR and/or ONT, wherein the optical filter is tuned to permit transmission of the first optical signal to the photosensor, and optionally only the first optical signal. Preferably, the light source comprises a laser and/or a Light-Emitting Diode. Optionally, the light source comprises a mode-locked laser. Optionally, the optical signal generator is integrated with the, or a, power splitter, thereby providing a power splitter comprising the optical signal generator.

According to a further aspect, there is provided a fibre optic telecommunications system comprising: a terminal laser for transmitting a first optical signal having a first pulse width; an Optical Time-Domain Reflectometer, OTDR, for measuring the first optical signal thereby to perform diagnostics upon the fibre optic telecommunications system; at least one Optical Network Unit, ONU; an optical signal generator, arranged between the OTDR and the at least one ONU, and comprising: a photosensor for sensing the first optical signal from the terminal laser; a light source for transmitting a second optical signal to the at least one ONU, the second optical signal having a second pulse width; and a controller configured to: identify, using an input from the photosensor, the first optical signal; and cause the light source to transmit, in response to identifying the first optical signal, the second optical signal to the at least one ONU, wherein the second pulse width is shorter than the first pulse width.

The invention includes any novel aspects described and/or illustrated herein. The invention also extends to methods and/or apparatus substantially as herein described and/or as illustrated with reference to the accompanying drawings. The invention is also provided as a computer program and/or a computer program product for carrying out any of the methods described herein and/or for embodying any of the apparatus features described herein, and a computer-readable medium storing thereon a program for carrying out any of the methods and/or for embodying any of the apparatus features described herein. Features described as being implemented in hardware may alternatively be implemented in software, and vice versa.

Any apparatus feature may also be provided as a corresponding step of a method, and vice versa. As used herein, means plus function features may alternatively be expressed in terms of their corresponding structure, for example as a suitably-programmed processor.

Any feature in one aspect of the invention may be applied, in any appropriate combination, to other aspects of the invention. Any, some and/or all features in one aspect can be applied to any, some and/or all features in any other aspect, in any appropriate combination. Particular combinations of the various features described and defined in any aspects of the invention can be implemented and/or supplied and/or used independently.

As used throughout, the word 'or' can be interpreted in the exclusive and/or inclusive sense, unless otherwise specified.

The invention extends to an apparatus, a telecommunications network and a method of operating telecommunications network as described herein and/or substantially as illustrated with reference to the accompanying drawings. The present invention is now described, purely by way of example, with reference to the accompanying diagrammatic drawings, in which:
Figure 1 shows, schematically, an exemplary fibre optic telecommunications network comprising an optical signal generator;
Figure 2 shows the optical signal generator in more detail;
Figure 3 shows a process of operating the fibre optic telecommunications network; and
Figures 4 shows schematic examples of Optical Time-Domain Reflectometer (OTDR) traces.

### Specific Description

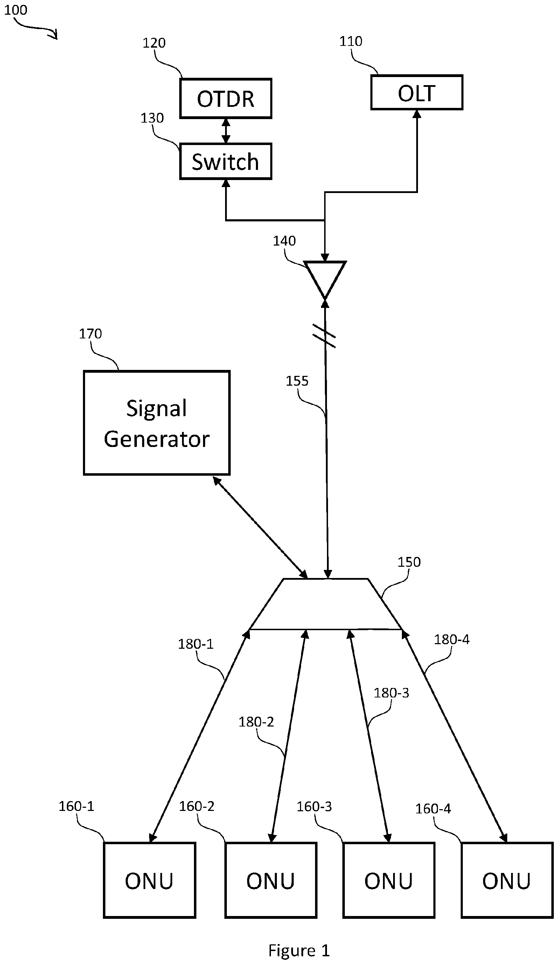

Figure 1 is a schematic diagram of a fibre optic telecommunications network 100, such as for providing wide-area fixed-access broadband network services. In particular, the network 100 is in the form of a Passive Optical Network (PON).

The network 100 comprises a/an: Optical Line Terminal (OLT) 110; Optical Time Domain Reflectometer (OTDR) 120; OTDR switch 130; WDM splitter 140; broadband optical splitter (or *"power splitter"* or *"splitter node"*) 150; plurality of Optical Network Units (ONUs) 160, including a first 160-1, second 160-2, third 160-3 and fourth 160-4 ONU; and an optical signal generator 170.

The aforementioned components are interconnected using optical links provided using, at least, fibre optic cables (represented in Figure 1 as arrowed lines) so as to provide telecommunications services between, at least, the OLT 110 and each of the ONUs 160, and diagnostic test services between, at least, the OTDR 120 and the same ONUs 160.

The OLT 110 is located at the head-end of the network 100, for example where a local exchange is sited, and is connected to the plurality of ONUs 160 via the WDM splitter 140 and the power splitter 150 (in which the former is located upstream of the latter). The OLT is connected to the power splitter via a feeder (or "spine") fibre optic cable 155. Each ONU is connected to the power splitter 150 via a dedicated corresponding distribution fibre optic cable 180 (also referred to as a "drop" cable); that is, a first optic cable 180-1 for connecting ONU 160-1, a second fibre optic cable 180-2 for connecting ONU 160-2, a third fibre optic cable 180-3 for connecting ONU 160-3, and a fourth fibre optic cable 180-4 for connecting ONU 160-4.

The OLT 110 and the OTDR 120 are operatively connected to a higher-layer network management software application (not shown) comprising an Element Management System (not shown) and/or a Network Management System (not shown). For example, via the network management software application, a user or the network 100 may trigger a diagnostic test to be performed by the OTDR 120.

The OTDR 120 is an optical reflectometry measuring device for the network 100. The OTDR 120 enables discovery of physical discontinuities (e.g. breaks in the fibre, faulty connections and splices, excessive fibre bends and other structural deformities) in an optical link. In the example of Figure 1, the OTDR 120 is a standalone device separate to the OLT 110, and the OTDR connects to the plurality of ONUs 160 using, at least, the same spine network as the OLT (i.e. via the WDM splitter 140 and power splitter 150).

The OTDR 120 is operated by sending a diagnostic signal, in the form of a pulse, through the network 100, this results in backscattering and reflections due to the presence of discontinuities in the fibre structure. Typically, the diagnostic signal is configured to have a sufficiently long pulse width so as to result in a return signal (e.g. from backscatter and reflections) that is detectable by the OTDR from a roundtrip to a desired target in the network (e.g. up to and including the ONUs 160).

By measuring roundtrip time-of-flight (from which, distance may be inferred) and magnitude of the returning diagnostic signal relative to the transmitted diagnostic signal, a suitably configured OTDR can help determine the location, nature and extent of physical discontinuities. For example, a drop in backscatter to a noise floor may indicate a full break, whereas a small reflection may indicate a connector with an air gap. However, as discussed above, attenuation limits efficacy (especially as to spatial resolving power) of the OTDR, and long-length feeder cable (which, for power loss at 0.25dB/km, amounts to a 5dB power loss over a 20km feeder cable) and the power splitter 150 (which can induce power loss of approximately 17db for a 32-way power splitter) are notable sources of such attenuation.

In this example, and as described in more detail below with reference to the optical signal generator 170, the diagnostic signal from the OTDR 120 also serves to trigger operation of the optical signal generator. The diagnostic signal therefore comprises, or consists of, a trigger signal for triggering the optical signal generator. In this way, the diagnostic signal from the OTDR serves dual purposes: performing a diagnostics test; and causing operation of the optical signal generator 170.

The optical signal generator 170 is configured to detect and transmit optical signals through the fibre optic network 100. Accordingly, the optical signal generator 170 is optically connected to a secondary input (not shown) of the power splitter 150 (e.g. via a single fibre optical cable); in this way, optical signals from the optical signal generator are communicable to the power splitter and on to the ONUs 160. Optical signals from the ONUs may be directly received by the optical signal generator 170 via the power splitter 150, whereas optical signals from the OLT 110 and the OTDR 120 (including, at least, the trigger signal) may be reflected, in part, by the power splitter towards the optical signal generator 170.

As described in more detail below, the optical signal generator 170 is configured to output, in response to detecting the trigger signal, a Higher-Resolution Diagnostic signal (herein also referred to as an "HRD" signal), that aids the OTDR to detect features of the network 100 beyond the power splitter at a higher spatial resolution than the distally located OTDR 120 is otherwise able to achieve using the diagnostic signal given the aforementioned limitations of OTDR.

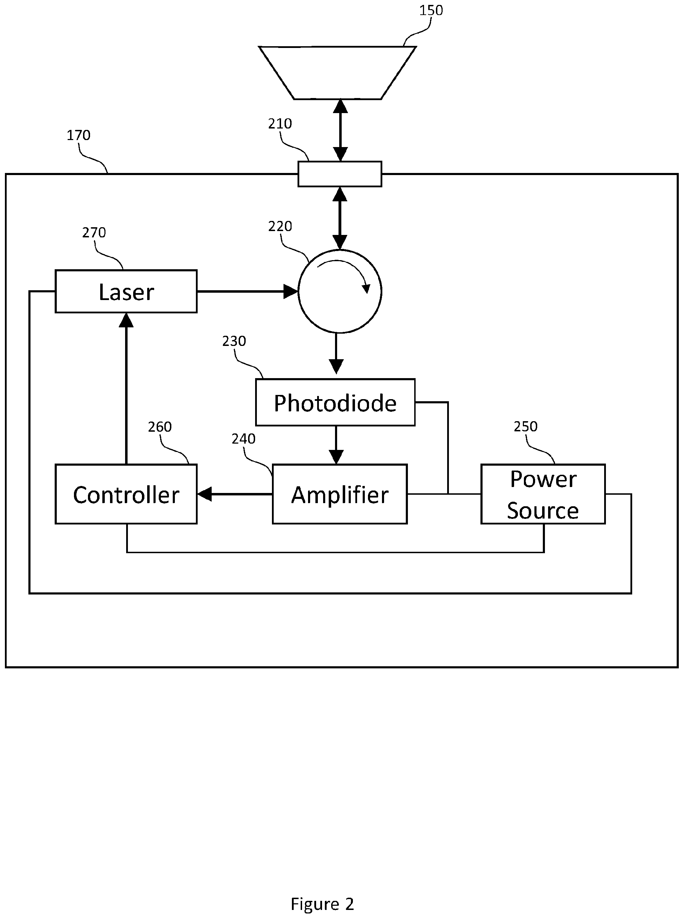

Figure 2 shows a more detailed schematic diagram of the optical signal generator 170, as coupled to the power splitter 150.

The optical signal generator comprises a/an: optical Input and Output (I/O) 210; circulator 220; photodiode 230; amplifier 240; power source 250; controller 260; and laser 270.

The optical signal generator 170 is optically connected to the secondary input of the power splitter 150 via the optical I/O 210. In this way, the optical signal generator is configured to receive an optical signal (e.g. the trigger signal) and to transmit the HRD signal, from and to, respectively, the power splitter 150.

The optical I/O 210 is optically coupled with the circulator 220, such that an optical signal is received by the optical signal generator 170 is transmitted to the circulator and then on to the photodiode 230.

The photodiode 230 is configured to convert the received optical signal into an electrical signal, and subsequently to transmit the electrical signal to the amplifier 240. In particular, the photodiode 230 is sensitive to the trigger signal, from which the electrical signal is generated.

The amplifier 240 is electrically coupled to the power source 250, which powers the amplifier 240, laser 270 and controller 260, and which also biases the photodiode 230. The power source 250 is in the form of a/an: battery; energy harvester, such as a photovoltaic cell; and/or electrical port, such as for receiving external power, including mains power.

The amplifier 240 is configured to amplify the electrical signal as received from the photodiode 230, thereby to generate an amplified electrical signal. The amplified electrical signal is then communicated on to the controller 260. The amplifier 240 is in the form of a current-to-voltage amplifier, and, for example, a transimpedance amplifier.

The controller 260 is in electrical communication with the amplifier 240 (thereby to receive the amplified electrical signal) and with the laser. The controller is a computing component that is configured to: store data; compute; perform logic; and to control operation of the laser 270, including configuring operating parameters of the laser.

The controller 260 is in the form of, for example, a/an: microcontroller; programmable logic controller; fixed-logic controller; ASIC; and/or CPU. The controller is configured to identify, from the amplified electrical signal, the trigger signal, and then to configure and operate the laser 270 to transmit the HRD signal in response.

Characteristics of the trigger signal are pre-defined, and said characteristics are stored in the controller 260. The characteristics pertain to, at least, wavelength and duration, and for example are a/an: wavelength of between 1600nm and 1650nm; and duration of at least 1ns, and up to 150µs.

The operating parameters configured by the controller for the laser 270 comprise optical parameters, including pulse width and wavelength, and timing.

The pulse width of the HRD signal is set to have a shorter pulse width than the pulse width of the diagnostic signal (and therefore also of the trigger signal, where the latter is a constituent of the former). In this way, the HRD signal helps the OTDR 120 achieve increased spatial resolution over the diagnostic signal, and since the optical signal generator is arranged (typically, significantly) downstream of the OTDR, backscatter and reflections from the HRD signal that are received by the OTDR (i.e. a *"return HRD signal*") experiences lower attenuation than a return OTDR signal would experience.

In one example, the pulse width of the HRD signal is set dynamically. In a more specific example, the HRD signal pulse width is derived from a measurement of pulse width of the diagnostic and/or trigger signals (e.g. as measured and processed by the photodiode 230 and controller 260, respectively). The controller is in turn configured to apply a function to the measured pulse width so as to calculate the HRD signal pulse width. The function is pre-defined and stored in the controller 260, and is available to be a: look-up function for mapping a measured pulse width to a corresponding pre-defined HRD signal pulse width; a linear scaling factor (i.e. less than 1, and greater than 0); a non-linear function; or a piecewise function. Alternatively, the HRD signal pulse width is dynamically derived independently of the measured pulse width, but instead based on another parameter, such as wavelength/s of the diagnostic and/or trigger signals.

In an alternative, the HRD signal pulse width is fixed, pre-defined, independent of any measured parameters of the diagnostic and/or trigger signals, and stored in the controller.

Regardless of the manner in which the HRD signal pulse width is determined, the pulse widths of the diagnostic signal and the HRD signal are configured to balance measured return signal intensity at the OTDR with spatial resolution. As a result, specific and relative the pulse widths are heavily dependent on specific applications, including: sensitivity of the OTDR 120; distances between the OTDR, power splitter, and the ONUs 160; desired target spatial resolutions; and characteristics (especially attenuation) of components within the network 100.

The wavelength of the HRD signal is set so as to be receivable by the OTDR 120, and not filtered-out by a receiver filter (not shown) of the OTDR, and not to interfere with service signals (from the OLT 110) that are used to communicate telecommunications services to end-users at the ONUs 160. To help prevent coherent interference with the diagnostic signal, the HRD signal uses a different, but similar, wavelength to the diagnostic signal. Typically, a diagnostic signal utilises non-service-carrying wavelengths, such as in the U-and/or C-bands (as defined by the ITU Telecommunication Standardization Sector), such as values of 1625nm and/or 1650nm. In one example, the HRD signal wavelength is dynamically determined from the wavelength of the diagnostic or trigger signal (by means of processing by the photodiode 230 and controller 260), or is pre-defined, fixed and stored in the controller 260.

The operating parameter of timing concerns when the laser 270 is operated to transmit the HRD signal after detection of the trigger signal.

OTDR typically operates by listening for signals for a set period of time after transmitting the diagnostic signal - a so-called listening timeframe, which is typically readily adjustable (e.g. by changing a range for the OTDR 120). Signals received by the OTDR after the set period of time are not processed.

To help ensure that the return HRD signal is processed by the OTDR 120, a characteristic duration of the trigger signal (*i.e*. in which optical signals shorter than said duration are not identified as the trigger signal) and a delay in outputting the HRD signal by the optical signal generator 170 are timed so as to ensure that the return HRD signal is received by the OTDR within the listening timeframe. For this purpose, a minimal characteristic duration (albeit balanced with preventing excessive false triggering) and a minimal delay are desirable. The delay comprises, at least, an inherent delay in commencing start-up of the laser 270, and is available also to include an induced additional delay. The delay is reducible by incorporating low-latency components, such as a controller in the form of an ASIC or fixed-logic controller.

Furthermore, a significant delay in transmitting the HRD signal may cause the OTDR 120 to incorrectly determine that the return HRD signal is associated with features located significantly further away from the OTDR than is actually the case (by a distance proportional to the delay). To correct for this distance-shifting as a result of the delay, a distance offset is applied to the return HRD signal, and the distance offset is calculated from a calibration operation. The calibration operation comprises comparing a time offset between receipt, at the OTDR 120, of the return diagnostic signal (identified from a baseline return diagnostic signal) and the return HRD signal. The time offset is then used to determine the correction offset so as to discount the delay when the OTDR uses the HRD signal.

At the same time, to help ensure that the return HRD signal is distinguishable from the return diagnostic signal, it is helpful for the former to be received by the OTDR after the latter has been fully received by the OTDR. Were this not the case, then the return HRD signal may be saturated by the return diagnostic signal. Accordingly, another constraint upon the characteristic duration and the delay is that, where the characteristic duration and delay are substantial relative to the diagnostic signal pulse width, the return HRD signal reaches the OTDR after the return diagnostic signal, all whilst still being received within the listening timeframe. To do so, in one example, the sum of the characteristic duration and the delay is set to be greater than the pulse width of the diagnostic signal.

In a specific example, the: distance between the OTDR 120 and the ONUs 160 is 10km; optical signal generator 170 is sited 5km away from the ONUs; OTDR listening timeframe is 500µs (it will be appreciated that listening timeframes are highly adjustable, and that shorter or longer periods are possible); the diagnostic signal consists of the trigger signal, and the pulse width of the diagnostic signal is 200µs; characteristic duration is 200µs; delay is 100µs; and the HRD signal pulse width is 0.5µs. In this example, the listening timeframe commences upon transmission of the diagnostic signal at a time, t, equal to 0. The time of flight from the OTDR to the ONUs of the diagnostic signal is 50µs (*i.e*. at a pace of 5µs/km over the 10km distance), and the return diagnostic signal therefore only first reaches the OTDR at *t*=50µs+50µs=100µs. Accounting for the pulse width, the return diagnostic signal is fully received at the OTDR at *t*=200µs+100µs=300µs. The trigger signal is fully identified at the power splitter t= 25µs+200µs=225µs (*i.e*. accounting for the characteristic duration), and the laser begins transmitting the HRD signal at *t*=225µs+100µs=325µs (*i.e*. due to the delay), and until t=325µs+0.5µs=325.5µs (*i.e*. given the HRD signal pulse width). The return HRD signal is therefore fully received by the OTDR at t=325.5µs+75µs=400.5µs and after the return diagnostic signal (by 100.5µs), and within the listening timeframe, which ends at *t*=500µs.

In an alternative, where the characteristic duration and the delay are negligible relative to the diagnostic signal pulse width, the return HRD signal is triggered near-simultaneously with the diagnostic signal and therefore to overlap with the return diagnostic signal. As such, the HRD signal is transmitted before the diagnostic signal is received fully by the OTDR. In this case, rather than saturation occurring, the HRD signal serves effectively to add power to the diagnostic signal.

In an alternative, it may be desirable for the OTDR only to detect the return HRD signal, and not the return diagnostic signal. In this case, the return diagnostic signal can be computationally removed (*e.g*. by recording a baseline of the return diagnostic signal) or by filtering-out the return diagnostic signal. To filter-out the return diagnostic signal, an optical filter is introduced into the path of the return diagnostic signal (*e.g*. at or near the OTDR) that filters out the wavelength of the return diagnostic signal, which is different to the wavelength of the return HDR signal. The filter is introduced before the return diagnostic signal returns to the OTDR, and may be introduced during transmission of the diagnostic signal.

The laser 270 is configured to output the HRD signal, as configured by the controller 260. The laser can either be selected to be the same wavelength as the OTDR (e.g. in particular where addition of the HRD and diagnostic signals is desired) or an entirely different wavelength (*e.g*. in particular when separation of higher spatial details from the diagnostic signal is desirable). The laser is a Distributed-Feedback (DFB) or Fabry-Perot (FP) laser, or generally a laser as conventionally used in OTDRs. As would be appreciated by a person skilled in the art, the laser 270 is configured to prevent coherent fading from significantly impacting linewidth.

The laser 270 is optically coupled to the circulator 220, such that an optical signal output by the laser (*e.g*. the HRD signal) is transmitted to the optical I/O 210, and therefore output from the optical signal generator 170 on towards the power splitter 150.

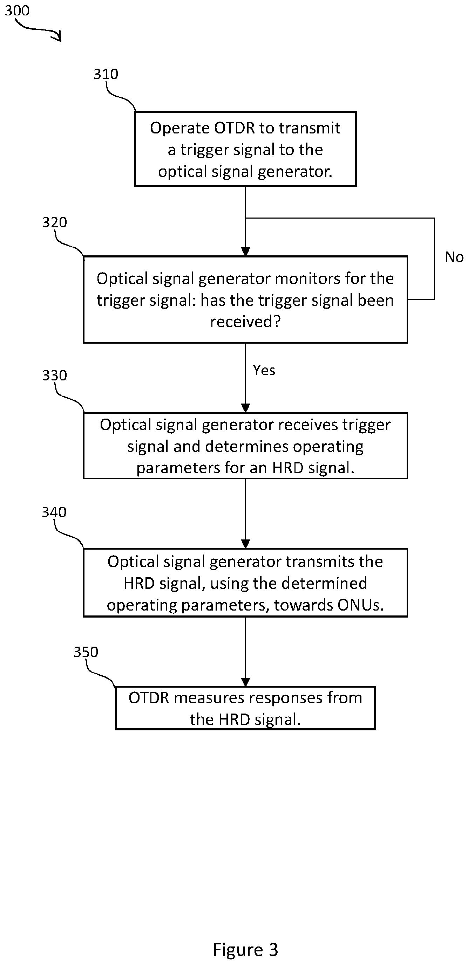

Figure 3 shows a process 300 of operating the fibre optic network 100 so as to obtain an improved OTDR trace having higher resolution downstream of the power splitter 150.

In a first step 310, the OTDR 120 is operated to transmit the trigger signal (*e.g*. as part of the diagnostic signal), which is communicated to the ONUs 160, and as a result of reflection by the power splitter 150, the trigger signal is received by the optical signal generator 170. In one example, the trigger signal has a pulse width of 500µs and a wavelength of 1625nm.

At a next step 320, the optical signal generator 170 monitors for, and makes a determination as to whether or not, the trigger signal has been detected; this is performed by comparing optical characteristics of an input optical signal against the pre-defined characteristics of the trigger signal (as stored in the controller 260), including whether the input optical signal meets or exceeds the characteristic duration.

If no trigger signal is detected, then the optical signal generator 170 continues to monitor for the trigger signal.

However, at a next step 330, in response to the optical signal generator 170 detecting the trigger signal (as processed by the photodiode 230, amplifier 240 and controller 260), the optical signal generator 170 determines operating parameters for the HRD signal, including pulse width. For example, based on the trigger signal having a pulse width of 500µs, the controller configures the HRD signal to have a pulse width of 100ns (*i.e.* 0.02% of the trigger signal pulse width).

The controller 260 subsequently operates 340 the laser 270 to transmit the HRD signal, which is communicated through the power splitter 150, on to the ONUs 160. In one example, the HRD signal has a wavelength of 1650nm, which is distinct to - and therefore distinguishable from - the diagnostic signal using a wavelength of 1625nm.

At a next step 350, a return HRD signal is received by the OTDR 120 and processed by the OTDR so as to generate an OTDR trace.

All else being equal, because of the locations in the network 100 that the HRD and diagnostic signals are generated, the OTDR may detect a higher intensity return HRD signal than the return diagnostic signal, given that the HRD signal is generated significantly further downstream, and therefore traverses a shorter distance (in fact, nearly half as much), and therefore suffers less attenuation. In addition, because of the shorter pulse width of the HRD signal (use of which is permitted by the reduced attenuation), the OTDR trace may achieve greater resolution with the return HRD signal than with the return diagnostic signal.

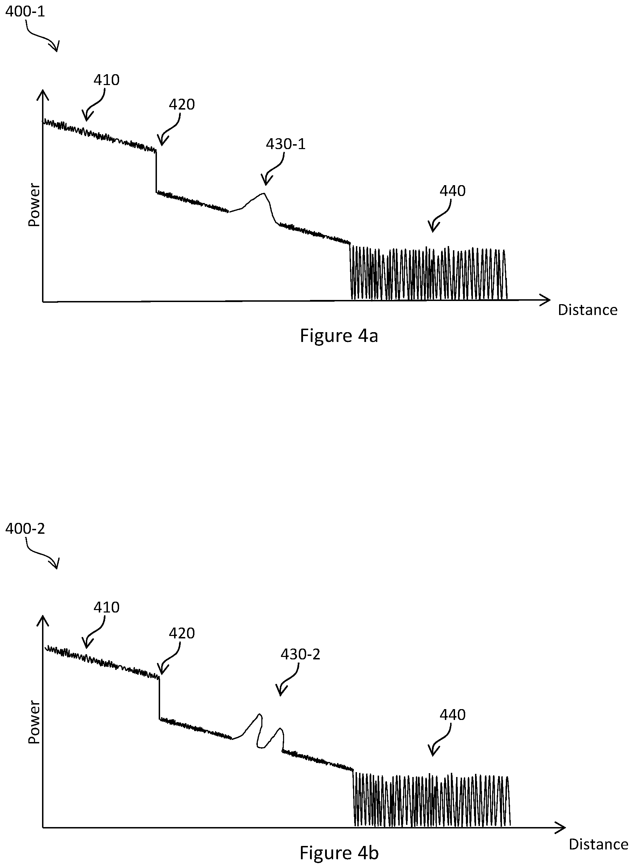

Figures 4 show exemplary schematic OTDR traces 400. Figure 4a shows a first OTDR trace 400-1, from only a diagnostic signal transmitted by the OTDR, whereas Figure 4b shows a second OTDR trace 400-2, generated according to process 300, and using the same diagnostic signal that in turn triggers the HRD signal having a significantly lower pulse width than said diagnostic signal. Each OTDR trace 400 represents received power (at the OTDR) of a return signal against distance from the OTDR.

In Figures 4a and 4b, the traces 400 show responses from: the feeder fibre 155, as a steady and gradual loss in received power with distance; the power splitter 150, as a sharp drop in received power; an anomaly within the fibre optic network downstream of the power splitter, comprising a peaked reflective response. Said responses are indicated with reference numerals 410, 420 and 430, respectively. The traces further comprise a noise floor 440.

The responses associated with the feeder fibre 410 and power splitter 420 are identical in the first 400-1 and second 400-2 OTDR traces, since these responses are only from identical diagnostic signals.

In the first OTDR trace 400-1, a response associated with the anomaly 430-1, shows only a single reflective peak, and is derived from only the return diagnostic signal. In the second OTDR trace 400-2, a corresponding response associated with the same anomaly 430-2, shows two reflective peaks, which is derived from the return diagnostic and HRD signals, the latter of which reveals the anomaly at a greater spatial resolution than the diagnostic signal, owing to the lower pulse width of the HRD signal. In this example, the anomaly is identified as two distinct features (e.g. two different ONUs 160, such as 160-1 and 160-2) in the second OTDR trace 400-2, rather than a single anomaly, as in the first OTDR trace 400-1 (which is suggestive of a single ONU).

### Alternatives and Modifications

To help prevent false triggering of the HRD signal, the optical signal generator 170 is configured so as not to transmit the HRD signal upon receipt of an optical signal that is not the trigger signal. This is achieved by, for example: providing a filter for filtering-out wavelengths that are not the trigger signal; configuring the photodiode so as only to be sensitive to the trigger signal; and/or configuring the controller to distinguish a trigger signal from a non-trigger signal, and to cause the laser 270 to transmit the HRD signal only in response to detecting the former.

In the description above, the trigger signal forms the, or a part of the, diagnostic signal. In an alternative, the trigger signal is independent of the diagnostic signal, such that the trigger signal is available to be transmitted by the OTDR 120 (or another source, such as the OLT 110 and/or an ONU 160) without transmitting the diagnostic signal. The OTDR is therefore configured to enter a detection mode, in which to detect return optical signals, in response to transmitting the trigger signal, as the OTDR would do were the diagnostic signal also transmitted, therefore to ensure that the return HRD signal is detected by the OTDR.

In an alternative, there are provided a plurality of different trigger signals, and the optical signal generator 170 is configured to distinguish between said plurality and to trigger different HRD signals in response to each of said plurality. For example, the operating parameters of the laser 270 are modified in response to a different trigger signal. In particular, HRD signals of different pulse widths are triggered by each of the different trigger signals.

In yet another alternative, the trigger signal causes the optical signal generator 170 sequentially to transmit a plurality of different HRD signals having different operating parameters, and in particular different pulse widths. For example, the optical signal generator transmits three sequential HRD signals, with each successive HRD signal having a shorter pulse width; this cascade of HRD signals allows testing at increased levels of resolution.

In an alternative, the (or another) photodiode 230 (or "*photosensor*" or "*photodetector*"*,* more generally) is configured to detect uplink optical signals from the plurality of ONUs 160. The optical signal generator 170 is configured to transmit the HRD signal in response to both detecting the trigger signal and in response to determining that no uplink optical signals have been received within a predetermined period of time. In this way, the optical signal generator 170 is available to be operated when an uplink fault downstream of the power splitter 150 is detected, and whilst the OTDR 120 is operational.

In an alternative, the circulator is replaced with at least one wavelength division filter or a power splitter.

Each feature disclosed herein, and (where appropriate) as part of the claims and drawings may be provided independently or in any appropriate combination.

Any reference numerals appearing in the claims are for illustration only and shall not limit the scope of the claims.

## Claims

1. A method of operating a fibre optic network, said network comprising:
a terminal laser for transmitting a first optical signal having a first pulse width;
an Optical Time-Domain Reflectometer, OTDR, for measuring the first optical signal thereby to perform diagnostics upon the fibre optic telecommunications network;
at least one Optical Network Unit, ONU;
an optical signal generator, arranged between the OTDR and the at least one ONU, and comprising:
a photosensor for sensing the first optical signal from the terminal laser; and
a light source for transmitting a second optical signal to the at least one ONU, the second optical signal having a second pulse width;
the method comprising the steps of:
transmitting, by means of the terminal laser, the first optical signal to the optical signal generator;
detecting, by means of the photosensor, the first optical signal;
transmitting, in response to said detecting, and by means of the light source, the second optical signal to the at least one ONU, wherein the second pulse width is shorter than the first pulse width.

2. A method according to Claim 1, wherein the terminal laser is formed as part of: the Optical Time-Domain Reflectometer, OTDR; an Optical Line Terminal, OLT; an Optical Network Terminal, ONT; or the at least one ONU.

3. A method according to Claim 1 or 2, wherein an optical parameter of the second optical signal is predefined, and wherein said optical parameter is stored in, or is communicated to, the optical signal generator.

4. A method according to Claim 3, wherein the optical parameter of the second optical signal is independent of the first optical signal.

5. A method according to Claim 1 or 2, wherein the photosensor is configured to measure an optical parameter of the first optical signal, and wherein an optical parameter of the second optical signal is determined in dependence upon the measured optical parameter of the first optical signal.

6. A method according to any preceding claim, wherein the second optical signal comprises a plurality of discrete optical signals, and wherein each of the plurality of discrete optical signals has a different optical parameter.

7. A method according to any preceding claim, wherein transmitting the second optical signal is performed after the detection of the first optical signal ends.

8. A method according to any of Claim 1 to 6, wherein transmitting the second optical signal is performed during ongoing detection, by the photosensor, of the first optical signal.

9. A method according to any preceding claim, wherein the OTDR comprises a listening timeframe for processing the first optical signal, and wherein the second optical signal is transmitted, and at least in part received, within the listening timeframe.

10. A method according to any preceding claim, wherein the first optical signal comprises an optical trigger signal, and wherein transmitting the second optical signal is performed in response to detecting said optical trigger signal.

11. A method according to any preceding claim, further comprising the step of receiving and processing, at and by the OTDR, at least a return second optical signal, said signal resulting from backscatter and/or reflection of the second optical signal.

12. A method according to any preceding claim, wherein the optical signal generator comprise a further photosensor for sensing, from the at least one ONU, a third optical signal, wherein, the optical signal generator is configured to transmit the second optical signal in response to detecting an absence of the third optical signal after a predetermined period of time.

13. A computer-readable carrier medium comprising a computer program, which, when the computer program is executed by a computer, causes the computer to carry out the steps of any one of the preceding claims.

14. An optical signal generator for testing a fibre optic telecommunications network, said network comprising:
a terminal laser for transmitting a first optical signal having a first pulse width;
an Optical Time-Domain Reflectometer, OTDR, for measuring the first optical signal thereby to perform diagnostics upon the fibre optic telecommunications network;
at least one Optical Network Unit, ONU; and
the optical signal generator comprising:
a photosensor for sensing the first optical signal from the terminal laser;
a light source for transmitting a second optical signal to the at least one ONU, the second optical signal having a second pulse width; and
a controller configured to:
identify, using an input from the photosensor, the first optical signal; and
cause the light source to transmit, in response to identifying the first optical signal, the second optical signal to at least one ONU, wherein the second pulse width is shorter than the first pulse width.

15. A fibre optic telecommunications system comprising:
a terminal laser for transmitting a first optical signal having a first pulse width;
an Optical Time-Domain Reflectometer, OTDR, for measuring the first optical signal thereby to perform diagnostics upon the fibre optic telecommunications system;
at least one Optical Network Unit, ONU;
an optical signal generator, arranged between the OTDR and the at least one ONU, and comprising:
a photosensor for sensing the first optical signal from the terminal laser;
a light source for transmitting a second optical signal to the at least one ONU, the second optical signal having a second pulse width; and
a controller configured to:
identify, using an input from the photosensor, the first optical signal; and
cause the light source to transmit, in response to identifying the first optical signal, the second optical signal to the at least one ONU, wherein the second pulse width is shorter than the first pulse width.
